# EUROPÄISCHE PATENTSCHRIFT

(11) **EP 2 342 480 B1**
(45) Veröffentlichungstag und Bekanntmachung des Hinweises auf die Patenterteilung: **06.03.2013**
(21) Anmeldenummer: 09781098.0
(22) Anmeldetag: 27.07.2009
(51) Int. Cl.: F16H 25/22

(54) **SCHRAUBGETRIEBE**
HELICAL GEARING
ENGRENAGE HÉLICOÏDAL

(30) Priorität: 23.09.2008 DE 102008042299
(43) Veröffentlichungstag der Anmeldung: 13.07.2011
(73) Patentinhaber: Robert Bosch GmbH, 70442 Stuttgart (DE)
(72) Erfinder: VERHAGEN, Armin, 71701 Schwieberdingen (DE); NAGEL, Willi, 71686 Remseck/Hochdorf (DE); GOETZELMANN, Bernd, 71277 Rutesheim (DE)
(86) Internationale Anmeldenummer: PCT/EP2009/059634
(87) Internationale Veröffentlichungsnummer: WO 2010/034542

(56) Entgegenhaltungen:
- EP-A- 2 075 488
- BE-A7- 830 218
- FR-A- 1 359 673
- US-A- 5 709 127

## Beschreibung

Die Erfindung betrifft ein Schraubgetriebe mit den Merkmalen des Oberbegriffs des Anspruchs 1.

Aus der DE 602 22 101 T2 ist ein Schraubgetriebe mit einer Spindel und einer aufgesetzten Mutter bekannt. Durch drehenden Antrieb der Spindel wird die Mutter axial verschoben. Insoweit entspricht das bekannte Schraubgetriebe herkömmlichen Schraubgetrieben. Die Mutter des bekannten Schraubgetriebes weist zwei gegenüberliegende, radial nach außen abstehende Wellenstummel auf, auf denen Rollen drehbar gelagert sind. Die Rollen greifen in Schlitze einer Hülse ein, die die Mutter und die Spindel koaxial umschließt. Die Schlitze verlaufen über einen Abschnitt in Längsrichtung des Schraubgetriebes, also achsparallel und gehen an einem Ende in einen gekrümmten Verlauf über, der mit einem radialen Verlauf, also quer zum Schraubgetriebe, endet. Die Hülse ist feststehend angeordnet, die Rollen der Mutter wälzen auf Flanken der Schlitze der Hülse. Befinden sich die Rollen der Mutter des bekannten Schraubgetriebes in den achsparallelen Abschnitten der Schlitze der Hülse, ist die Mutter drehfest gehalten und verschiebt sich bei Drehung der Spindel entsprechend der Gewindesteigung. Auch das entspricht herkömmlichen Schraubgetrieben. Gelangen die Rollen der Mutter in die gebogenen Abschnitte der Schlitze, dreht sich die Mutter, die Drehung der Mutter überlagert sich der Drehung der Spindel, so dass sich die Verschiebung der Mutter verkleinert oder vergrößert, je nach dem, ob die Schlitze in Steigungsrichtung der Spindel gebogen verlaufen oder entgegengesetzt. Es ändert sich somit die scheinbare Steigung des Schraubgetriebes, es lässt sich bei gegebenem Antriebsmoment eine höhere Axialkraft der Mutter oder umgekehrt eine größere Verschiebegeschwindigkeit bei gegebener Drehgeschwindigkeit der Spindel erzielen. Eine scheinbare Übersetzung des Schraubgetriebes ändert sich, wobei mit scheinbarer Übersetzung das Verhältnis der Verschiebegeschwindigkeit der Mutter in Bezug auf die Drehgeschwindigkeit der Spindel gemeint ist.

Zu ergänzen ist, dass es sich um Relativbewegungen der Mutter zur Spindel handelt. Anstatt die Spindel drehend anzutreiben, kann auch die Mutter bzw. die sie umschließende Hülse drehend angetrieben und dadurch die Spindel verschoben werden. Auch ist eine Verschiebung der Spindel oder der Mutter möglich um eine Drehbewegung des jeweils anderen Teils, also der Mutter mit der Hülse oder der Spindel zu bewirken.

### Offenbarung der Erfindung

Das erfindungsgemäße Schraubgetriebe mit den Merkmalen des Anspruchs 1 weist ein Gewinde beispielsweise an einer Gewindespindel auf. Am Gewinde greift ein Gegenstück anstelle einer Mutter an. Dafür weist das Gegenstück beispielsweise einen Zapfen, einen Kulissenstein, einen Wälzkörper, beispielsweise eine Rolle oder dgl. auf, der an einer Gewindeflanke des Gewindes anliegt. Eine Anlage an einer Gewindeflanke genügt, wenn ein Vortrieb nur in einer Richtung erfolgen soll bzw. das Schraubgetriebe immer in derselben Richtung belastet ist. Für einen Zweirichtungsantrieb muss der Angriff des Gegenstücks am Gewinde an zwei Gewindeflanken erfolgen, die einander zu- oder abgewandt sind. Es kann also beispielsweise ein Gewindegang als Nut ausgebildet sein, in den eine Rolle des Gegenstücks eingreift. Die beiden Nutflanken bilden einander zugewandte Gewindeflanken, die Rolle des Gegenstücks wälzt abhängig von der Drehrichtung des Gewindes auf einer der beiden Gewindeflanken. Das Gegenstück wird in beiden Richtungen angetrieben. Auch kann das Gegenstück zwei Rollen aufweisen, zwischen denen sich ein erhabener Gewindegang des Gewindes befindet, so dass die Rollen auf zwei einander abgewandten Gewindeflanken des Gewindes wälzen. Das Gegenstück wird dabei ebenfalls in beiden Richtungen angetrieben. Der Angriff am Gewinde kann auch gleitend anstatt wälzend, beispielsweise mit einem Zapfen oder einem Kulissenstein des Gegenstücks erfolgen.

Erfindungsgemäß weist das Gewinde des Schraubgetriebes eine sich ändernde Steigung auf, so dass sich eine Übersetzung des Schraubgetriebes ändert. Die Übersetzung des Schraubgetriebes ist das Verhältnis der Verschiebung des Gegenstücks zur Drehung (Drehwinkel) des Gewindes. Es kann wie zum Stand der Technik erläutert das Gegenstück drehend angetrieben und das Gewinde dadurch verschoben werden oder es kann eine Verschiebung des Gewindes oder des Gegenstücks in eine Drehung des jeweils anderen Teils gewandelt werden.

Die Steigung des Gewindes des erfindungsgemäßen Schraubgetriebes kann sich grundsätzlich beliebig ändern, kann also beispielsweise größer und wieder kleiner werden. Möglich ist auch eine abschnittsweise Steigung von Null oder sogar eine abschnittsweise negative Steigung, womit gemeint ist, dass sich die Gewindesteigung umkehrt, d.h. ein Rechtsgewinde einen oder mehrere als Linksgewinde ausgebildete Abschnitte aufweist. Die Verschiebung des Gegenstücks in Bezug auf das Gewinde kehrt sich in diesen Abschnitten um.

Vorteil des erfindungsgemäßen Schraubgetriebes ist wie bereits gesagt die sich ändernde Übersetzung. Dadurch lassen sich in Abschnitten des Gewindes eine große Axialkraft bei gegebenem Drehmoment und in anderen Abschnitten des Gewindes eine hohe Verschiebegeschwindigkeit bei gegebener Drehgeschwindigkeit erreichen. Es muss nicht zwingend eine Spindel das Gewinde aufweisen, es kann auch umgekehrt das Gegenstück beispielsweise als Hülse mit einem Innengewinde ausgebildet sein, an dem ein Zapfen, Kulissenstein, eine Rolle oder dgl. einer die Hülse durchgreifenden Stange oder eines sonstigen Bauteils angreifen. Die Funktion des Schraubgetriebes ändert sich dadurch nicht, die Konstruktion ändert sich dadurch selbstverständlich, allerdings bleibt das der Erfindung zugrunde liegende Konstruktionsprinzip erhalten.

Das Gewinde des erfindungsgemäßen Schraubgetriebes ist mehrgängig und das Gegenstück weist für jeden Gewindegang einen Zapfen, Kulissenstein, Wälzkörper oder dgl. Element auf, das am jeweiligen Gewindegang angreift . Mit zwei Gewindegängen lässt sich das Gegenstück momentenfrei antreiben, wobei ein Moment um eine gedachte Achse radial zum Schraubgetriebe, also ein Kippmoment um eine Querachse des Gegenstücks gemeint ist. Mit drei Gewindegängen ist der Angriff des Gegenstücks am Gewinde statisch bestimmt.

Die Unteransprüche haben vorteilhafte Ausgestaltungen und Weiterbildungen der im Anspruch 1 angegebenen Erfindung zum Gegenstand. Anspruch 4 sieht ein Federelement vor, das durch Verschieben des Gegenstücks gegenüber dem Gewinde in einer Richtung gespannt und durch Verschieben des Gegenstücks in entgegengesetzter Richtung entspannt wird. Es wird also bei einer Verstellung in einer Richtung Energie in das Federelement eingespeichert, die das Federelement bei einer Verstellung in umgekehrter Richtung wieder abgibt (wenn man von Verlusten absieht). Das Federelement kann vorgespannt sein, so dass es immer eine Federkraft auf das Gegenstück ausübt. Weiter sieht Anspruch 4 vor, dass die Gewindesteigung größer wird, wenn die Federkraft oder Vorspannung durch die Verformung des Federelements, also durch die Verschiebung des Gegenstücks in Bezug auf das Gewinde, kleiner wird. Es wird also die Übersetzung des Schraubgetriebes größer wenn die Federkraft des Federelements kleiner wird. Gegenstand des Anspruchs 4 ist an sich eine Betätigungseinrichtung, die eine Kraft oder ein Moment abgibt. Bei umgekehrter Bewegungsrichtung wird das Federelement gespannt bzw. stärker gespannt, d. h. es wird Energie eingespeichert. Die Betätigungseinrichtung kann auch als Aktuator bezeichnet werden. Sie ermöglicht die Verwendung eines vergleichsweise leistungsschwachen Antriebs, da ein Teil der Kraft, die die Betätigungseinrichtung ausübt, vom gespannten Federelement aufgebracht wird. Dafür muss der Antrieb die Betätigungseinrichtung aktiv zurückstellen, d. h. das Federelement nach der Betätigung wieder spannen um die zuvor abgegebene Energie wieder einzuspeichern. Wie gesagt kann die Betätigungseinrichtung eine Kraft oder ein Moment ausüben. Außer einem linear wirkenden Federelement wie beispielsweise eine Druck- oder Zugfeder kann die Betätigungseinrichtung auch ein Federelement aufweisen, das ein Moment ausübt, beispielsweise eine Spiralfeder.

Eine Betätigungseinrichtung, wie sie in vorstehendem Absatz erläutert worden ist, kann auch ein Gewinde mit konstanter Steigung aufweisen (Anspruch 6).

Anspruch 9 sieht eine Bremse vor, mit der das Schraubgetriebe in beliebiger Stellung feststellbar ist. Verwendbar ist beispielsweise eine elektromagnetische Bremse, die stromlos betätigt, d.h. zugespannt ist. Es sind sowohl kraft- als auch formschlüssige Bremsen oder auch Kupplungen verwendbar.

Das erfindungsgemäße Schraubgetriebe ist auch als variabler Dämpfer verwendbar, dies ist Gegenstand des Anspruchs 11. Die Dämpfung erfolgt durch Bremsen der Drehung des Gewindes und/oder durch Bremsen der Verschiebung des Gegenstücks. Das Bremsen kann mit einer Bremse oder beispielsweise auch mit einem Motor erfolgen. Beispielsweise kann ein Elektromotor als Generator oder auch im sog. Vier-Quadranten-Betrieb, also wahlweise als Motor und als Generator betrieben werden, um eine gewünschte, variable Dämpfung zu bewirken. Es ist vorgesehen, dass der Motor oder allgemein ein Antrieb gegen eine Last arbeitet. Auch mit einem Hydromotor, einem Hydraulikzylinder oder einem sonstigen Antrieb ist eine variable Dämpfung und bei Bedarf ein Antrieb möglich. Das erfindungsgemäße Schraubgetriebe ist auch als Energiespeicher verwendbar.

### Kurze Beschreibung der Zeichnung

Die Erfindung wird nachfolgend anhand in der Zeichnung dargestellter Ausführungsformen erläutert. Es zeigen:
- Figur 1: einen Achsschnitt eines erfindungsgemäßen Schraubgetriebes;
- Figur 2: einen Achsschnitt eines Aktuators mit einem Schraubgetriebe gemäß der Erfindung;
- Figur 3: einen weiteren Aktuator mit einem Schraubgetriebe gemäß der Erfindung im Achsschnitt; und
- Figur 4: eine Abwicklung eines Gewindegangs eines Schraubgetriebes gemäß der Erfindung.

Weitere Merkmale der Erfindung ergeben sich aus der folgenden Beschreibung von Ausführungsformen der Erfindung in Verbindung mit den Ansprüchen, der vorangegangenen Beschreibung und der Zeichnung. Die einzelnen Merkmale können je für sich oder zu mehreren in beliebiger Kombination bei Ausführungsformen der Erfindung verwirklicht sein.

### Ausführungsformen der Erfindung

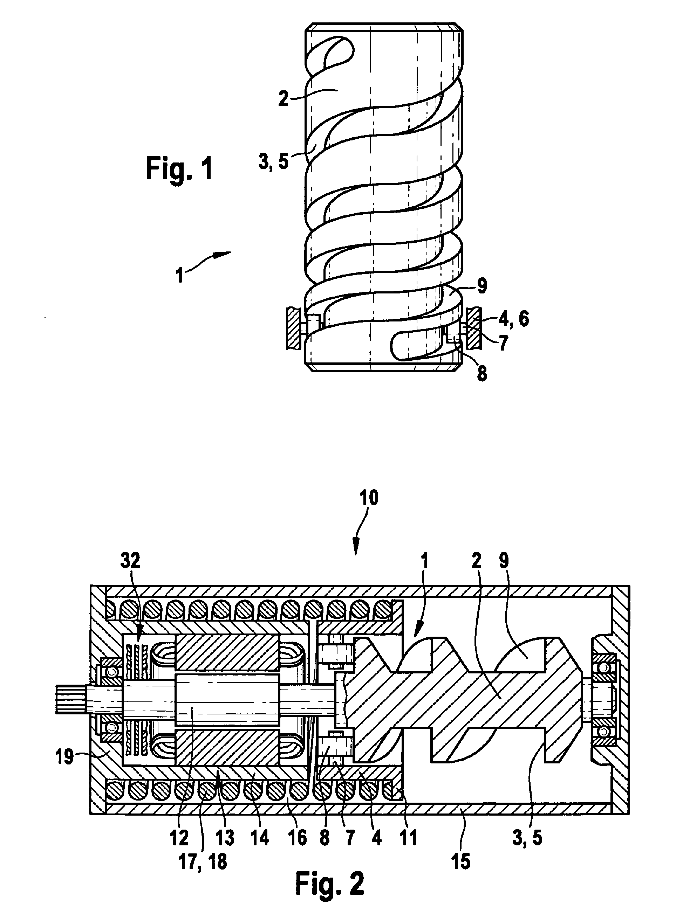

Das in Figur 1 dargestellte, erfindungsgemäße Schraubgetriebe 1 weist eine Spindel 2 mit einem Gewinde 3 und ein Gegenstück 4 auf, das am Gewinde 3 angreift. Das Gegenstück 4 hat an sich die Funktion einer Mutter, es wird bei drehendem Antrieb der Spindel 2 axial verschoben.

Gewindegänge 5 des Gewindes 3 sind als wendelförmige Nuten ausgebildet; es sind auch andere Querschnitte der Gewindegänge 4 möglich, beispielsweise können die Gewindegänge auch erhaben sein, wie es in Figur 2 zu sehen ist. Die Besonderheit ist, dass das Gewinde 3 eine sich ändernde Steigung aufweist, die Gewindesteigung nimmt in einer Richtung zu.

Das Gegenstück 4 weist eine Hülse 6 auf, die die Spindel 2 konzentrisch umschließt. Von der Hülse 6 stehen Wellenstummel 7 nach innen, auf denen Rollen 8 als Wälzkörper drehbar gelagert sind. Die Rollen 8 greifen in die als Nuten ausgeführten Gewindegänge 5 ein; bei Drehung der Spindel 2 wälzen die Rollen 8 auf Gewindeflanken 9 der Gewindegänge 5 bzw. des Gewindes 3. Das Gegenstück 4 weist für jeden Gewindegang 5 eine Rolle 8 auf, die in den Gewindegang 5 eingreift oder anders ausgedrückt am Gewinde 3 angreift.

Durch Drehung der Spindel 2 wird das Gegenstück 4 axial gegenüber der Spindel 2 verschoben, wobei sich aufgrund der sich ändernden Gewindesteigung die Verschiebegeschwindigkeit des Gegenstücks 4 bei konstanter Drehgeschwindigkeit der Spindel 2 ändert. Ebenfalls ändert sich aufgrund der sich ändernden Gewindesteigung die Kraft in axialer Richtung, mit der das Gegenstück 4 bei konstantem Antriebsmoment der Spindel 2 verschoben wird.

Selbstverständlich ist auch eine kinematische Umkehrung möglich: Es kann das Gegenstück 4 drehend angetrieben werden und verschiebt dadurch die Spindel 2 gegenüber dem Gegenstück 4. Auch ist es möglich, die Spindel 2 oder das Gegenstück 4 axial gegenüber dem jeweils anderen Teil 4, 2 zu verschieben und dadurch das jeweils andere Teil, also das Gegenstück 4 oder die Spindel 2 in Drehung zu versetzen. Voraussetzung für die Wandlung einer Verschiebung in eine Drehung ist eine ausreichend große Gewindesteigung, die eine Selbsthemmung vermeidet. Aufgrund der Wälzlagerung des Eingriffs des Gegenstücks 4 mit seinen Rollen 8 in das Gewinde 3 genügt hierfür eine vergleichsweise kleine Gewindesteigung.

Auch die Wälzlagerung des Gewindeeingriffs ist nicht zwingend, auch eine Gleitlagerung ist möglich, indem beispielsweise die Wellenstummel 7 des Gegenstücks 4 als Stifte in die Gewindegänge 5 eingreifen (nicht dargestellt). Durch die sich ändernde Gewindesteigung ändert sich eine Übersetzung des Schraubgetriebes 1.

Grundsätzlich genügt ein eingängiges Gewinde 3, an dem das Gegenstück 4 an einer Stelle angreift, d.h. ein Gewinde 3 mit einem Gewindegang 5, in den das Gegenstück 4 mit einer Rolle 8 eingreift (nicht dargestellt). Bei der in Figur 1 dargestellten Ausführungsform der Erfindung ist das Gewinde 3 zweigängig, es weist zwei Gewindegänge 5 auf, in die zwei Rollen 8 eingreifen, die einander gegenüberliegend angeordnet sind. Dadurch wird ein symmetrischer Antrieb des Gegenstücks 4 erreicht und ein Kippmoment des Gegenstücks 4 vermieden. Ein dreigängiges Gewinde 3, an dem das Gegenstück 4 an drei über den Umfang gleichmäßig oder ungleichmäßig verteilt angeordneten Stellen angreift, würde das Gegenstück 4 statisch bestimmt abstützen (nicht dargestellt).

In Figur 2 ist ein Schraubgetriebe 1 in einen Aktuator 10 integriert. Eine andere Bezeichnung für den Aktuator 10 ist Betätigungseinrichtung. Wie in Figur 1 weist das Gewinde 3 eine sich ändernde Gewindesteigung auf. Im Unterschied zu Figur 1 sind in Figur 2 die Gewindegänge 5 erhaben, das Gewinde 3 weist hier ein Sägezahnprofil auf. Das Gegenstück 4 ist rohrförmig und weist einen nach aussen stehenden Radialflansch 11 auf. Rollen 8 des Gegenstücks 4 wälzen auf einer radialen Gewindeflanke 9 des das Sägezahnprofil aufweisenden Gewindes 3. Ein Federelement 17, das sich an einer Stirnwand 19 eines Aktuatorgehäuses 15 abstützt, drückt gegen den Radialflansch 11 des Gegenstücks 4, so dass die Rollen 8 immer auf der radialen Gewindeflanke 9 des Gewindes 3 wälzen und nicht von der Gewindeflanke 9 abheben.

Die Spindel 2 des Schraubgetriebes 1 ist starr verbunden mit einer Motorwelle 12 eines Elektromotors 13, sie kann einstückig mit der Motorwelle 12 sein. Zur Verkleinerung der Schwungmasse können die Spindel 2 und/oder die Motorwelle 12 hohl sein (nicht dargestellt). Es können auch die Rollen an der Motorwelle oder einer die Motorwelle verlängernden Welle angeordnet sein und auf Innengewindegängen des Gegenstücks wälzen (nicht dargestellt). Anstatt die Spindel 2 drehfest mit der Motorwelle 12 vorzusehen, kann ein (Untersetzungs-) getriebe zwischen dem Elektromotor 13 und dem Schraubgetriebe 1 angeordnet sein. Die Angabe "zwischen" bezieht sich nicht unbedingt auf die räumliche Anordnung eines solchen Getriebes, sondern auf seine Anordnung bezüglich der Momentenübertragung. Wegen seines kompakten Aufbaus eignet sich ein Planetengetriebe.

Die Spindel 2 und die Motorwelle 12 sind gleichachsig zueinander. Der Elektromotor 13 weist ein rohrförmiges Motorgehäuse 14 auf, das koaxial in dem rohrförmigen Aktuatorgehäuse 15 angeordnet ist. Ein Durchmesser des Aktuatorgehäuses 15 ist größer als ein Durchmesser des Motorgehäuses 14, so dass ein Ringspalt 16 zwischen dem Aktuatorgehäuse 15 und dem Motorgehäuse 14 besteht, in dem das Federelement 17 angeordnet ist. In Figur 2 ist das Federelement 17 eine Schraubendruckfeder 18.

Durch Drehantrieb der Spindel 2 mit dem Elektromotor 13 wird das Gegenstück 4 verschoben. Die Gewindesteigung vergrößert sich mit zunehmender Entfernung vom Elektromotor 13, also bei einer Entspannung des Federelements 17. Zur Abgabe eines Drehmoments wird der Elektromotor 13 bestrommt und die Motorwelle 12 dadurch drehend angetrieben. Die Drehung und das Drehmoment sind an der Motorwelle 12 abgreifbar. Die Drehung wird vom Federelement 17 unterstützt, das gegen das Gegenstück 4 drückt und über das Schraubgetriebe 1 ein Drehmoment auf die Spindel 2 ausübt. Der Elektromotor 13 bringt somit nur einen Teil des Drehmoments auf, das der Aktuator 10 abgibt. Das vom Aktuator 10 abgegebene Drehmoment kann allgemein auch als äussere Last bzw. als Reaktionsmoment zu einer äusseren Last aufgefasst werden, die ausserhalb des Aktuatorgehäuses 15 als Moment an der Motorwelle 12 angreift. Zur Rückstellung wird der Elektromotor 13 mit umgekehrter Drehrichtung betrieben. Er spannt dabei über das Schraubgetriebe 1 das Federelement 17, speichert also Enegie in das Federelement 17, die anschließend bei einem Drehantrieb wieder abgegeben wird. Die Rückstellung erfolgt aktiv mit dem Elektromotor 13, der wie beschrieben ein Drehmoment ausüben muss, um das Federelement zu spannen. Wirkt die äussere Last auch bei der Rückstellung, unterstüzt sie die Rückstellung. In diesem Fall bringt der Elektromotor 13 nur einen Teil des Moments auf, das zum Spannen des Federelements 17 notwendig ist. Bei einem Halten der äusseren Last unterstützt das Federelement 17 den Elektromotor 13 und verringert dadurch dessen Stromaufnahme und thermische Belastung.

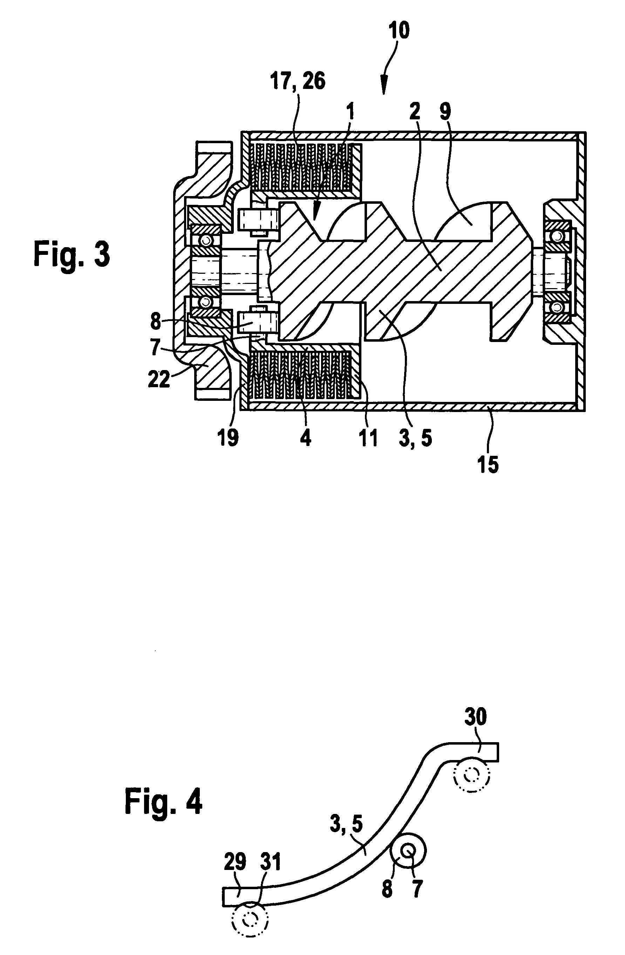

Figur 3 zeigt einen weiteren Aktuator 10 mit einem erfindungsgemäßen Schraubgetriebe 1, dessen Gewindesteigung sich ändert. Das Schraubgetriebe 1 ist in einem Aktuatorgehäuse 15 untergebracht. Die Spindel 2 des Schraubgetriebes 1 ist wie in Figur 2 ausgeführt, sie weist Gewindegänge 5 mit Sägezahnprofil auf, auf denen Rollen 8 des rohrförmigen Gegenstücks 4 wälzen. Der Aktuator 10 aus Figur 3 weist keinen Elektromotor auf, zum Drehantrieb der Spindel 2 ist ein Zahnrad 22 drehfest auf einem Ende der Spindel 2 befestigt. Als Federelement 17 weist der in Figur 3 dargestellte Aktuator 10 ein Tellerfederpaket 26 auf, das in einem Ringspalt zwischen dem rohrförmigen Gegenstück 4 und dem rohrförmigen Aktuatorgehäuse 15 angeordnet ist. Das Tellerfederpaket 26 stützt sich an einer Stirnwand 19 des Aktuatorgehäuses 15 ab und drückt gegen einen nach außen stehenden Radialflansch 11des Gegenstücks 4.

Der Aktuator 10 aus Figur 3 weist eine hohe Leistungsdichte und eine kompakte Bauform auf. Durch die aufgelöste Bauform mit einem separaten Antriebsmotor ist eine freiere Anordnung möglich. Beispielsweise kann ein Elektro-Antriebsmotor parallel neben dem Aktuator 10 oder radial zu ihm angeordnet werden. Der Aktuator 10 aus Figur 3 kann als passiver Aktuator aufgefasst weren, weil er keinen Motor oder sonstigen Antrieb aufweist. Er funktioniert nur in Verbindung mit einem aktiven Aktuator, der beispielsweise ein Elektro-, Hydro- oder pneumatischer Motor ist. Der nicht dargestellte aktive Aktuator kontrolliert und steuert den passiven Aktuator, der beispielsweise über das Zahnrad 22 mit dem nicht dargestellten Elektro- oder sonstigen Motor gekoppelt ist, der den aktiven Aktuator bildet oder Bestandteil eines aktiven Aktuators ist. Andere Kopplungen beispielsweise auch mit einem Zahnstangengetriebe sind möglich.

Die Aktuatoren 10 aus Figuren 2 und 3 können auch als (Rotations-) Dämpfer mit variabler Dämpfung verwendet werden. Ein Drehantrieb der Spindel 2 wird gedämpft, indem der Elektromotor 13 als Generator betrieben wird und die Drehung der Spindel 2 bremst, , d.h. dämpft. Auch ein sog. Vier-Quadranten-Betrieb des Elektromotors 13 ist möglich, bei dem der Elektromotor situationsabhängig als Motor oder als Generator betrieben wird. Durch Steuerung oder Regelung der Generatorleistung des Elektromotors 13 ist die Höhe des Bremsmoments des Elektromotors 13 und damit die Höhe der Dämpfung einstellbar, d.h. die Dämpfung des als Dämpfer verwendeten Aktuators 10 ist variabel. Eine Dämpferwirkung ist auch mit einer Bremse 32 möglich, wie sie anhand Figur 2 weiter unten beschrieben werden wird.

Beim Verschieben des Gegenstücks 4 wird die das Federelement 17 bildende Schraubendruckfeder 18 stärker vorgespannt und speichert auf diese Weise Energie, die sie beim nächsten Ausfahren des Gegenstücks 4 wieder abgibt. Der Aktuator 10 bildet somit einen Energiespeicher. Auch die Energiespeicherung im Federelement 17 trägt dazu bei, einen leistungsschwächeren Elektromotor 13, einen Hydromotor, einen Hydraulikzylinder oder einen sonstigen Antrieb verwenden zu können.

Figur 4 zeigt die Abwicklung eines möglichen Gewindegangs 5 des Gewindes 3 eines erfindungsgemäßen Schraubgetriebes 1, wie es in Figuren 1-3 dargestellt ist. Die axiale Richtung der in Figur 4 nicht dargestellten Spindel 2 ist in Figur 4 vertikal, die radiale Richtung zur Spindel 2 folglich horizontal. Wie zu sehen hat der Gewindegang 5 zu Beginn und am Ende radiale Abschnitte 29, 30. Dort ist das Gewinde 3 selbsthemmend, es sperrt das in Figur 4 nicht dargestellte Gegenstück 4 gegen eine Axialverschiebung, ohne dass ein Moment auf die Spindel 2 ausgeübt werden muss. Vom Gegenstück 4 sind in Figur 4 der Wellenstummel 7 und die darauf drehbar gelagerte Rolle 8 an verschiedenen Stellen des Gewindegangs 5 dargestellt. Wie dargestellt kann der Gewindegang 5 an den radialen Abschnitten 29, 30 eine Vertiefung 31 aufweisen, in die die Rolle 8 sozusagen einschnappt und den Gewindetrieb in dieser Stellung fixiert.

Im Bereich zwischen den radialen Abschnitten 29, 30 weist der Gewindegang 5 eine stetig zunehmende Steigung auf. Das ist nicht zwingend, die Steigung des Gewindegangs 5 kann auch wieder abnehmen, es sind sogar Abschnitte mit negativer Steigung möglich, an denen sich die Bewegungsrichtung des Gegenstücks 4 umkehren würde (nicht dargestellt). Wie anhand Figur 4 ohne weiteres erkennbar ist eine nahezu beliebige Wahl der Steigung des Gewindes 3 bzw. seiner Gewindegänge 5 möglich, um an jeder Stelle der Spindel 2 eine gewünschte Übersetzung des Schraubgetriebes 1 zu erreichen.

Der Aktuator 10 bildet eine Baugruppe mit dem Schraubgetriebe 1 und dem Elektromotor 13 als Antriebsmotor bzw. in Figur 3 eine Baugruppe nur mit dem Schraubgetriebe 1 ohne Antriebsmotor.

Der Aktuator 10 weist eine Bremse 32 auf, mit der die Motorwelle 12 und die Spindel 2 und damit der Aktuator 10 insgesamt feststellbar sind. Es kann sich um eine Bremse 32 handeln, die in Ruhe zugespannt ist und zum Lösen betätigt werden muss. In diesem Fall muss die Bremse 32 gelöst werden wenn der Aktuator 10 betätigt werden soll. In Figur 2 ist symbolisch eine Magnetbremse 32 gezeichnet, die beispielsweise in zugespanntem Zustand stromlos stabil ist. Auch ist die Verwendung einer bistabilen Magnet- oder sonstigen Bremse möglich, die sowohl in zugespannter als auch in gelöster Stellung stromlos verbleibt und die nur zum Umschalten, d.h. zum Lösen und zum Zuspannen betätigt bzw. bestromt werden muss.

## Patentansprüche

1. Schraubgetriebe, mit einem Gewinde (3) und mit einem am Gewinde (3) angreifenden Gegenstück (4), wobei das Gewinde (3) gegenüber dem Gegenstück (4) drehbar ist, so dass eine Drehbewegung des Gewindes (3) gegenüber dem Gegenstück (4) das Gegenstück (4) gegenüber dem Gewinde (3) verschiebt, **dadurch gekennzeichnet, dass** das Gewinde (3) eine sich ändernde Steigung aufweist, dass das Gewinde mehrgängig ist, und dass das Gegenstück (4) an jedem Gewindegang (5) angreift.

2. Schraubgetriebe nach Anspruch 1, **dadurch gekennzeichnet, dass** das Gegenstück (4) einen Wälzkörper (8) aufweist, der auf einer Gewindeflanke (9) des Gewindes (3) wälzt.

3. Schraubgetriebe nach Anspruch 1, **dadurch gekennzeichnet, dass** das Gegenstück (4) für jeden Gewindegang (5) einen Wälzkörper (8) aufweist.

4. Schraubgetriebe nach Anspruch 1, **dadurch gekennzeichnet, dass** das Schraubgetriebe (1) ein Federelement (17) aufweist, das sich bei einer Verschiebung des Gegenstücks (4) gegenüber dem Gewinde (3) verformt und dass die Steigung des Gewindes (3) größer wird wenn eine Federkraft des Federelements (17) durch Verformung des Federelements (17) kleiner wird.

5. Schraubgetriebe nach Anspruch 1, **dadurch gekennzeichnet, dass** das Gewinde (3) stellenweise keine Steigung aufweist.

6. Schraubgetriebe nach Anspruch 4, **dadurch gekennzeichnet, dass** das Gewinde (3) eine konstante Steigung aufweist.

7. Schraubgetriebe nach Anspruch 4, **dadurch gekennzeichnet, dass** das Schraubgetriebe (1) eine Baugruppe bildet.

8. Schraubgetriebe nach Anspruch 1, **dadurch gekennzeichnet, dass** das Schraubgetriebe (1) einen Antriebsmotor (13) aufweist.

9. Schraubgetriebe nach Anspruch 1, **dadurch gekennzeichnet, dass** das Schraubgetriebe (1) eine Bremse (32) aufweist, mit der das Gewinde (3) mit dem Gegenstück (4) feststellbar ist.

10. Schraubgetriebe nach Anspruch 8, **dadurch gekennzeichnet, dass** das Schraubgetriebe (1) ein Federelement (17) aufweist, das bei einer Verschiebung des Gegenstücks (4) gegenüber dem Gewinde (3) in einer Richtung (Arbeitshub) entspannt wird und zusätzlich zum Antriebsmotor (13) Energie abgibt und das bei einer Verschiebung des Gegenstücks (4) gegenüber dem Gewinde (3) in entgegengesetzter Richtung (Rückhub) vom Antriebsmotor (13) über das Schraubgetriebe (1) unterstützt von einer äußeren Last gespannt wird, sofern eine äußere Last im Sinne eines Rückhubs auf das Gewinde (3) oder das Gegenstück (4) wirkt.

11. Schraubgetriebe nach Anspruch 1 **dadurch gekennzeichnet, dass** das Schraubgetriebe (1) ein Federelement (17) aufweist, das sich bei einer Verschiebung des Gegenstücks (4) gegenüber dem Gewinde (3) verformt, dass das Schraubgetriebe (1) einen Antriebsmotor (13) aufweist und dass Schraubgetriebe (1) als variabler Dämpfer verwendet wird.

## Claims

1. Helical gear, having a thread (3) and having a counterpiece (4) which acts on the thread (3), the thread (3) being rotatable with respect to the counterpiece (4), with the result that a rotational movement of the thread (3) with respect to the counterpiece (4) displacing the counterpiece (4) with respect to the thread (3), **characterized in that** the thread (3) has a varying lead, **in that** the thread has multiple starts, and **in that** the counterpiece (4) acts on every thread turn (5).

2. Helical gear according to Claim 1, **characterized in that** the counterpiece (4) has a rolling body (8) which rolls on a thread flank (9) of the thread (3).

3. Helical gear according to Claim 1, **characterized in that** the counterpiece (4) has a rolling body (8) for every thread turn (5).

4. Helical gear according to Claim 1, **characterized in that** the helical gear (1) has a spring element (17) which is deformed in the case of a displacement of the counterpiece (4) with respect to the thread (3), and **in that** the lead of the thread (3) becomes greater when a spring force of the spring element (17) becomes smaller as a result of deformation of the spring element (17).

5. Helical gear according to Claim 1, **characterized in that** the thread (3) has no lead in places.

6. Helical gear according to Claim 4, **characterized in that** the thread (3) has a constant lead.

7. Helical gear according to Claim 4, **characterized in that** the helical gear (1) forms one assembly.

8. Helical gear according to Claim 1, **characterized in that** the helical gear (1) has a drive motor (13).

9. Helical gear according to Claim 1, **characterized in that** the helical gear (1) has a brake (32), by way of which the thread (3) can be locked with the counterpiece (4).

10. Helical gear according to Claim 8, **characterized in that** the helical gear (1) has a spring element (17) which is relieved in the case of a displacement of the counterpiece (4) with respect to the thread (3) in one direction (work stroke) and outputs energy in addition to the drive motor (13), and which is stressed in the case of a displacement of the counterpiece (4) with respect to the thread (3) in the opposite direction (return stroke) by the drive motor (13) via the helical gear (1), assisted by an external load if an external load acts on the thread (3) or the counterpiece (4) in the direction of a return stroke.

11. Helical gear according to Claim 1, **characterized in that** the helical gear (1) has a spring element (17) which is deformed in the case of a displacement of the counterpiece (4) with respect to the thread (3), **in that** the helical gear (1) has a drive motor (13), and **in that** the helical gear (1) is used as a variable damper.

## Revendications

1. Engrenage hélicoïdal, pourvu d'un filet (3) et d'une contre-pièce (4) s'engrenant au niveau du filet (3), le filet (3) pouvant être pivoté par rapport à la contre-pièce (4), de sorte qu'un mouvement de pivotement du filet (3) par rapport à la contre-pièce (4) permet de déplacer la contre-pièce (4) par rapport au filet (3), **caractérisé en ce que** le filet (3) présente une inclinaison variable, que le filet comporte plusieurs nervures et que la contre-pièce (4) s'engrène au niveau de chaque nervure de filet (5).

2. Engrenage hélicoïdal selon la revendication 1, **caractérisé en ce que** la contre-pièce (4) comporte un corps de rouleau (8) roulant sur un flanc de filet (9) du filet (3).

3. Engrenage hélicoïdal selon la revendication 1, **caractérisé en ce que** la contre-pièce (4) comporte un corps de rouleau (8) pour chaque rainure de filet (5).

4. Engrenage hélicoïdal selon la revendication 1, **caractérisé en ce que** l'engrenage hélicoïdal (1) comporte un élément de ressort (17) se déformant par rapport au filet (3) lors du déplacement de la contre-pièce (4) et que l'inclinaison du filet (3) augmente à mesure que la force de ressort de l'élément de ressort (17) diminue par déformation de l'élément de ressort (17).

5. Engrenage hélicoïdal selon la revendication 1, **caractérisé en ce que** le filet (3) ne comporte aucune inclinaison par endroits.

6. Engrenage hélicoïdal selon la revendication 4, **caractérisé en ce que** le filet (3) présente une inclinaison constante.

7. Engrenage hélicoïdal selon la revendication 4, **caractérisé en ce que** l'engrenage hélicoïdal (1) forme une unité modulaire.

8. Engrenage hélicoïdal selon la revendication 1, **caractérisé en ce que** l'engrenage hélicoïdal (1) comporte un moteur d'entraînement (13).

9. Engrenage hélicoïdal selon la revendication 1, **caractérisé en ce que** l'engrenage hélicoïdal (1) comporte un frein (32) permettant de bloquer le filet (3) avec la contre-pièce (4).

10. Engrenage hélicoïdal selon la revendication 8, **caractérisé en ce que** l'engrenage hélicoïdal (1) comporte un élément de ressort (17) se détendant lors du déplacement de la contre-pièce (4) par rapport au filet (3) dans une certaine direction (course de travail) et transmettant en outre de l'énergie au moteur d'entraînement (13) et se tendant dans la direction opposée (course de rappel) par rapport au moteur d'entraînement en entrée (13) lors d'un déplacement de la contre-pièce (4) par rapport au filet (3), par le biais de l'engrenage hélicoïdal (1), soutenu par une charge extérieure, dans la mesure où une charge extérieure agit sur le filet (3) ou la contre-pièce (4) dans le sens d'une course de rappel.

11. Engrenage hélicoïdal selon la revendication 1, **caractérisé en ce que** l'engrenage hélicoïdal (1) comporte un élément de ressort (17) se déformant par rapport au filet (3) lors du déplacement de la contre-pièce (4), que l'engrenage hélicoïdal (1) comporte un moteur d'entraînement (13) et que l'engrenage hélicoïdal (1) sert d'amortisseur variable.
